**Europäisches Patentamt**

**European Patent Office**

**Office européen des brevets**

(11) Veröffentlichungsnummer: **0 353 647 B1**

(12) **EUROPÄISCHE PATENTSCHRIFT**

(45) Veröffentlichungstag der Patentschrift: **14.04.93**

(51) Int. Cl.⁵: **G01D 5/26**, G01B 9/02, G01P 3/36

(21) Anmeldenummer: **89113955.2**

(22) Anmeldetag: **28.07.89**

(54) **Einrichtung zur Messung des Drehwinkels oder der Winkelstellung eines rotierenden Objektes.**

(30) Priorität: **01.08.88 DE 3826149**

(43) Veröffentlichungstag der Anmeldung:
**07.02.90 Patentblatt 90/06**

(45) Bekanntmachung des Hinweises auf die
Patenterteilung:
**14.04.93 Patentblatt 93/15**

(84) Benannte Vertragsstaaten:
**FR GB IT**

(56) Entgegenhaltungen:
**EP-A- 0 146 768**
**DE-A- 2 456 649**
**FR-A- 1 541 747**
**FR-A- 2 252 557**

(73) Patentinhaber: **Deutsche Forschungsanstalt**
**für Luft- und Raumfahrt e.V.**
**Linder Höhe Postfach 90 60 58**
**W-5000 Köln 90(DE)**

(72) Erfinder: **Tank, Volker, Dr.Dipl.-Ing.**
**Stegener Strasse 4**
**W-8088 Eching(DE)**
Erfinder: **Dietl, Helmut, Dipl.-Ing (FH)**
**Orff-Strasse 12**
**W-8000 München 90(DE)**
Erfinder: **Lanzl, Franz, Prof.-Dr.-Dipl.-Phys.**
**Am Katzenstein 24**
**W-8031 Wessling(DE)**

(74) Vertreter: **von Kirschbaum, Albrecht,**
**Dipl.-Ing.**
**Hermann-Ehlers-Strasse 21a**
**W-8034 Germering (DE)**

EP 0 353 647 B1

**Beschreibung**

Die Erfindung betrifft eine Einrichtung zur Messung des Drehwinkels eines rotierenden Objektes unter Verwendungeines Michelson-Interferometers nach EP-A-0 146 768.

Gegenwärtig werden zur Drehwinkelmessung elektromagnetische oder elektrooptische Winkelkodierer, Winkelgeber und Impulsgeber verwendet. Bei diesen Geräten ist jedoch nachteilig, daß mit den verwendeten, mechanischen Kodierscheiben in Form von Lochmasken bzw. mit magnetischen Kodierscheiben nur eine sehr begrenzte Winkelauflösung und nur eine begrenzte Winkelgenauigkeit möglich ist und für relativ hohe Auflösungen und Genauigkeiten ein großer Aufwand erforderlich ist.

Aufgabe der Erfindung ist es daher eine Einrichtung zur Messung des Drehwinkels eines rotierenden Objekts zu schaffen, bei welcher mit geringem Aufwand eine sehr hohe Winkelauflösung und Winkelgenauigkeit erreichbar ist. Gemäß der Erfindung ist dies bei einer Einrichtung nach dem Oberbegriff des Anspruchs 1 durch die Merkmale in dessen kennzeichnenden Teil gelöst. Vorteilhafte Weiterbildungen der erfindungsgemäßen Einrichtung sind Gegenstand der abhängigen Ansprüche.

Gemäß der Erfindung ist das rotierende Spiegelelement, in Form eines Retroreflektors des Interferometers nach EP-A-0 146 768 mit dem zu messenden rotierenden Objekt gekoppelt, so daß das Spiegelelement durch das "Meßobjekt" in Rotation versetzt wird und somit dann dieselbe Rotationsbewegung wie dieses ausführt.

Ferner ist gemäß der Erfindung die Strahlung einer Laserquelle in der Weise in das Interferometer eingeführt, daß diese Strahlung in bekannter Weise durch Strahlteiler, zwei feste Spiegel und den Retroreflektor zur Interferenz gebracht wird und die Laserinterferenzen von einem für diese Strahlung empfindlichen Detektor registriert werden.

Gemäß der Erfindung ist bei der Rotationsbewegung, die der Retroreflektor ausführt, die Wegänderung in Richtung des Laserstrahls und damit die Wegdifferenz in den Armen des Interferometers in Kosinus-Abhängigkeit zur Winkelstellung des rotierenden Retroreflektors. Diese Wegänderung wird über die sich ändernden Laserinterferenzen gemessen, wodurch gemäß der Erfindung die Winkelstellung des Retroreflektors und damit diejenige des Objekts gemessen wird. Je kürzer hierbei die Wellenlänge der verwendeten Laserstrahlung ist, desto höher ist die Winkelauflösung der Einrichtung. Das Wechseln der Laserinterferenzen führt am Detektor zu einem Wechselsignal, welches in bekannter Weise registriert wird; hierzu kann beispielsweise ein einfacher Zähler verwendet werden, welcher die auftretenden Impulsflanken zählt und so die einzelnen Wechselvorgänge registriert.

Nachfolgend wird die Erfindung anhand von bevorzugten Ausführungsformen unter Bezugnahme auf die anliegenden Zeichnungen im einzelnen erläutert. Es zeigen:

Fig.1    eine Ausführungsform einer Einrichtung gemäß der Erfindung, bei welcher ein Interferometer mit einem geneigten, rotierenden Retroreflektor vorgesehen ist;

Fig.2    eine weitere Ausführungsform einer Einrichtung gemäß der Erfindung, bei welcher ein Interferometer mit einem rotierenden Retroreflektor und einem brechenden Keil vorgesehen ist, und

Fig.3    eine schematische Darstellung, aus welcher der Zusammenhang zwischen Wegänderung und Winkelstellung zu ersehen ist.

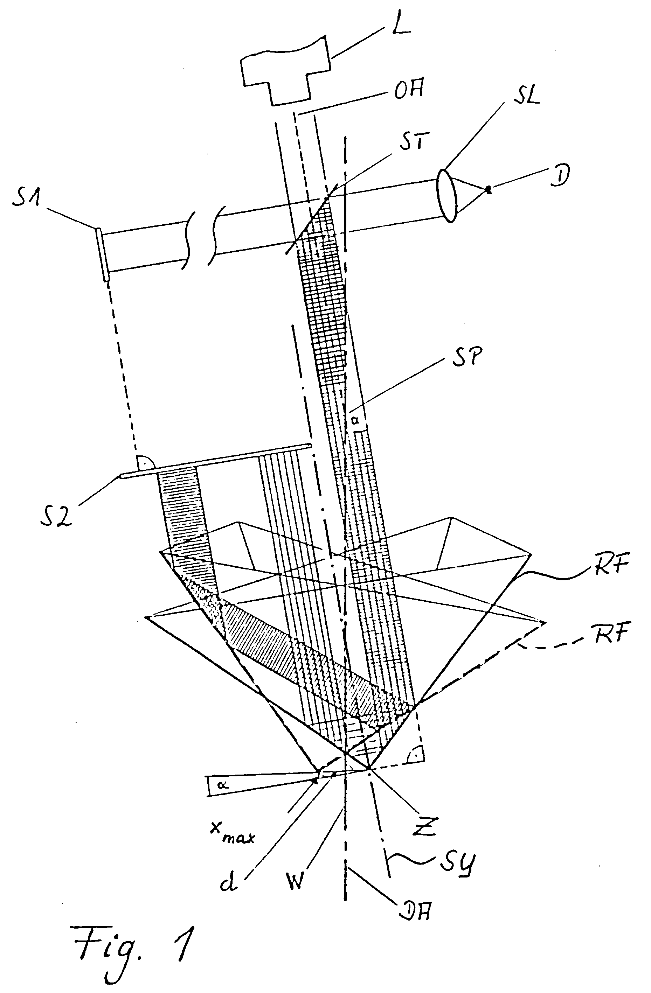

In Fig.1 ist ein Interferometer dargestellt, welches einen ersten festen Planspiegel S1, eine zweiten, dazu senkrecht angeordneten festen Planspiegel S2, einen Strahlteiler ST, welcher unter 45° zu den beiden Spiegeln S1 und S2 angeordnet ist, sowie einen rotierbaren Retroreflektor RF aufweist. Dessen Drehachse DA ist in Bezug auf das Reflektorzentrum Z, d.h. die Spitze des Reflektors, seitlich um einen Abstand d versetzt und in Bezug auf die Reflektorsymmetrieachse SY, d.h. die Achse, welche konzentrisch zu dessen Kanten durch dessen Zentrum Z verläuft, um einen Winkel $\alpha$ geneigt; dessen Drehachse DA ist ferner in Bezug auf die optische Achse OA des Systems um vorzugsweise denselben Winkel $\alpha$ geneigt. Der Retroreflektor RF ist in Fig.1 in zwei Positionen dargestellt, von denen dessen gestrichelt wiedergegebene Position um 180° gegenüber der ausgezogen wiedergegebenen Position gedreht ist.

Ferner weist das Interferometer einen Detektor D und eine Laserquelle L auf, deren Strahlung vorzugsweise parallel zum Spiegel S1 und senkrecht zum Spiegel S2, d.h. deckungsgleich mit der optischen Achse OA verläuft.

Der Retroreflektor RF ist ferner starr mit einer - nicht näher dargestellten - Welle W verbunden, welche konzentrisch zu seiner Drehachse DA angebracht ist. (Die Spiegel S1 und S2 sowie der Strahlteiler ST können auch unter anderen Winkeln zueinander orientiert und ausgerichtet sein.) Die optische Achse OA und die Drehachse DA schneiden sich vorzugsweise in einem Punkt SP. Die Welle W ist mit einer - ebenfalls nicht näher dargestellten - Drehachse des Meßobjekts zu verbinden, dessen Winkelstellung zu messen ist.

Die Weglänge durch die beiden Interferometerarme, nämlich über den Strahlteiler ST zum Spiegel S1 und über den Strahlteiler ST zum Spiegel S2, sind annähernd gleich lang; dies ist jedoch nicht unbedingt notwendig, da als Strahlungsquelle ein Laser L mit großer Kohärenzlänge dient; es ist also ein der Interferometeranordnung der Fig.1 entsprechender, kompakter Aufbau realisierbar.

Bei kontinuierlicher Rotation des Retroreflektors RF ändert sich die Weglänge der Strahlung in diesem Interferometerarm periodisch, und zwar bei jeder Umdrehung von einer minimalen zu einer maximalen Weglänge und wieder zurück zu einer minimalen Weglänge. Die Weglänge im Interferometerarm mit dem Spiegel S1 bleibt unverändert, so daß die am Strahlteiler ST von beiden Interferometerarmen zusammengeführten Strahlungshälften Phasendifferenzen proportional den Wegdifferenzen unterliegen, was zu periodisch wechselnden Interferenzen führt, welche am Detektor D registriert werden. Hierzu wird die Strahlung mittels einer Sammellinse SL auf dem Detektor D fokussiert. Die Anzahl der auftretenden Interferenzwechsel und damit die Winkelauflösung der Anordnung ist proportional der maximalen, optischen Wegdifferenz $\Delta_{max}$ und umgekehrt proportional der Wellenlänge des Lasers L.

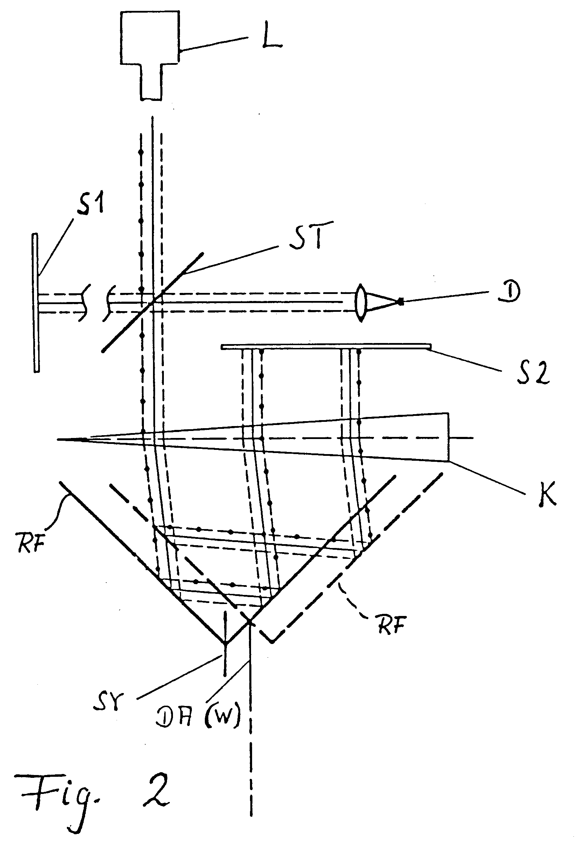

In Fig.2 ist eine weitere Ausführungsform der erfindungsgemäßen Einrichtung dargestellt, wobei die gleichen Elemente wie in der Ausführungsform der Fig.1 mit denselben Bezugszeichen bezeichnet sind und nachstehend nicht mehr gesondert beschrieben werden.

In Fig.2 zeigt ein entsprechend ausgeführtes Interferometer mit einem brechenden Keil K, wobei die Drehachse DA des - ähnlich wie in Fig.1 wieder in zwei um 180° auseinanderliegenden Positionen dargestellten - Retroreflektors RF parallel zur Symmetrieachse SY und zur optischen Achse DA verlaufen kann. Der Wegunterschied wird in diesem Fall durch eine Auslenkung des Laserstrahls L und ein damit bewirktes Durchlaufen unterschiedlicher Stärken des brechenden Keils K erreicht.

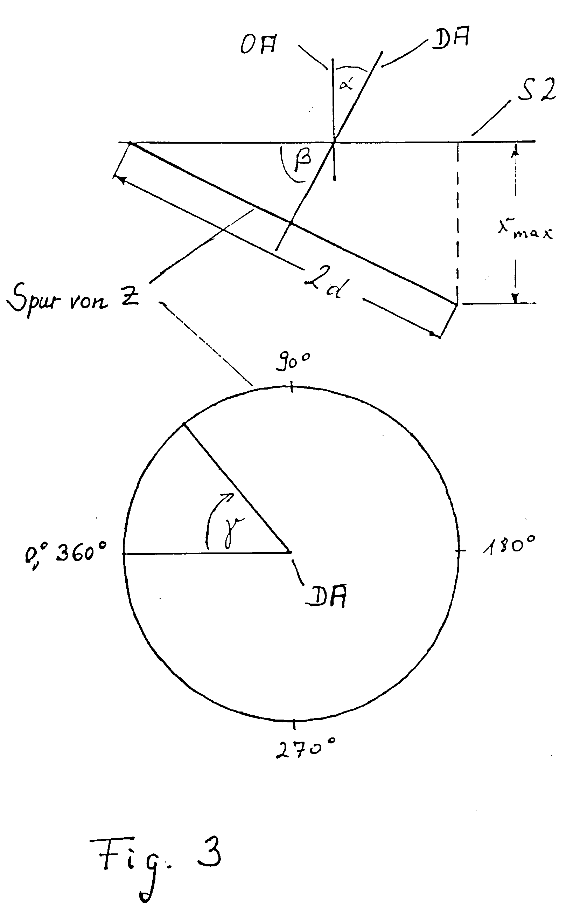

In Fig.3 ist in einer Seitenansicht und in einer Draufsicht die Spur des Zentrums Z des Retroreflektors RF dargestellt. Hierbei sind schematisch die Drehachse DA und als Bezugsfläche der Wegauslenkung x der parallel verschobene, zweite feste Spiegel S2 sowie die optische Achse OA dargestellt. Der Winkel $\beta$ ist der Neigungswinkel der Drehachse DA in Bezug auf den zweiten festen Spiegel S1; für den Winkel $\beta$ gilt dann: $\beta = 90° - \alpha$. Der Drehwinkel des Retroreflektors RF ist mit $\gamma$ bezeichnet, und er wird von der minimalen Wegdifferenz $x_{min}$ bei $\gamma = 0°$ zur maximalen Wegdifferenz $x_{max}$ bei $\gamma = 180°$ und wieder zurück zur minimalen Wegdifferenz bei $\gamma = 360°$ gezählt. Die maximale Wegdifferenz $x_{max}$ zwischen dem Spiegel S2 und dem Retroreflektor RF ist, wie aus Fig.3 ersichtlich, folgende:

$$x_{max} = 2d \cos \beta \qquad (1)$$

Damit ist die maximale optische Wegdifferenz $\Delta_{max}$:

$$\Delta_{max} = 8d \cos \beta \qquad (2)$$

da der Laserstrahl den Arm mit dem Retroreflektor RF viermal durchläuft.

Der optische Wegunterschied $\Delta$ in Abhängigkeit vom Drehwinkel $\gamma$ ergibt sich dann zu:

$$\Delta = 4d \, tg \, \alpha \, (1 - \cos \gamma) \qquad (3)$$

Damit ergibt sich der Drehwinkel $\gamma$ zu:

$$\gamma = \text{arc cos} \, \frac{4 \, tg \, \alpha - \Delta}{4d \, tg \, \alpha} \qquad (4)$$

Der optische Wegunterschied $\Delta$ ergibt sich über die gemessenen Laserinterferenzen aus der Laserwellenlänge $\lambda$, wobei $d\Delta = \lambda/2$ von einer Interferenz zur nächsten ist.

Für einen Winkel $\gamma > 180°$ ergibt sich $\gamma$ aus:

$$\gamma = 180° + \text{arc cos} \, \frac{4d \, tg \, \alpha - \Delta}{4d \, tg \, \alpha} \qquad (5)$$

Anschließend soll anhand eines Zahlenbeispiels die mögliche Winkelauflösung der erfindungsgemäßen Einrichtung abgeschätzt werden. Da bei einer Umdrehung der Wegunterschied vom Minimum über das Maximum wieder zum Minimum durchlaufen wird, ergibt sich mit $\beta$ = 80°, d = 1cm, $\lambda$ = 0,632$\mu$m und $\triangle_{max}$ = 1,38cm = 13,8.10$^3\mu$m die mittlere Winkelauflösung zu

$$\frac{4\triangle_{max}}{\lambda} = 87,899.10^3 \ Impulse/Umdrehung.$$

Wird statt des angenommenen HeNe-Lasers ein UV-Laser mit beispielsweise einer Wellenlänge von $\lambda$ = 100nm verwendet, so ergibt sich ein Wert von 5,55520.10$^5$ Impulsen/Umdrehung. Selbstverständlich lassen sich auch die Dimensionen von $\beta$ und d in Richtung einer noch höheren Winkelauflösung ändern.

Mit der Erfindung können also Winkelmessungen extrem hoher Auflösung durchgeführt werden, deren Genauigkeit durch die Wellenlänge der Laserstrahlung gegeben ist. Hinsichtlich Genauigkeit und Auflösung übertrifft die erfindungsgemäße Einrichtung damit die herkömmlichen Methoden und Geräte um Größenordnungen.

Als Retroreflektor kann jeder bekannte Retroreflektor verwendet werden, der - per Definition - einen einfallenden Strahl parallel zu sich selbst (in der Regel seitlich versetzt) zurückwirft, so beispielsweise Tripelspiegel, sphärische Retroreflektoren u.ä..

Die Tripelspiegel bestehen beispielsweise aus drei senkrecht zueinander angeordneten, reflektierenden Flächen. Besonders vorteilhaft sind Tripelspiegel aus einer massiven "Würfelecke" eines Materials, das für die Strahlung des Lasers durchlässig ist. Dabei werden die drei zueinander senkrechten Flächen außen mit einer die Laserstrahlung reflektierenden Beschichtung versehen, während die vierte Fläche als Ein- und Austrittsfläche für die Laserstrahlung unbeschichtet und damit strahlungsdurchlässig bleibt. (Sie könnte allenfalls mit einer Antireflexionsbeschichtung versehen werden).

Der Vorteil eines massiven Retroreflektors besteht darin, daß er auch bei hohen Drehzahlen seine Form und damit seine optischen Eigenschaften behält und somit die Funktion der Anordnung durch ihn nicht beeinflußt wird.

Als Material für einen massiven Tripelspiegel kann Quarz verwendet werden, welches sichtbare und ultraviolette Strahlung bis hinunter zu einer Wellenlänge von etwa 150nm durchläßt. Bei Verwendung anderer Materalen, welche aus der technischen Optik bekannt sind, ist ein Betrieb der Anordnung auch bei kürzeren Wellenlängen eines Lasers möglich. Selbstverständlich ist der Retroreflektor auszuwuchten, was bei massiven Würfelecken einfach zu bewerkstelligen ist.

Die vorstehenden Gl. 'en (3) bis (5) gelten bezüglich einer Nullstellung, welche durch die minimale Wegdifferenz definiert ist. Diese kann in bekannter Weise bei Justierung der Einrichtung durch einen zusätzlichen elektrooptischen oder elektromagnetischen Impulsgeber festgelegt werden. Ebenso ist es möglich, die Nullstellung durch das aus der Interferometrie bekannte "Weißlichtsignal" zu bestimmen; hierzu sind die Interferometerarme in der Nullstellung auf gleiche Länge zu justieren. Zusätzlich sind dabei eine Weißlichtquelle und ein Weißlichtdetektor im Interferometer erforderlich.

Die Drehrichtung kann in bekannter Weise durch zusätzliche Maßnahmen ermittelt werden. Das Zählen der Laserinterferenzen kann mit einem Vorwärts-Rückwärtszähler erfolgen, der durch die Interferenzflanken und den Drehrichtungsgeber gesteuert wird. Dem Zähler ist eine Logikschaltung nachzuordnen, welche beispielsweise mit Hilfe der Gl. 'en (4) und (5) den jeweiligen Drehwinkel errechnet, oder aus einer abgespeicherten Tabelle herausliest. Über eine weitere elektronische Schaltung kann schließlich der ermittelte Drehwinkel angezeigt werden.

Fertigungstechnisch besonders vorteilhaft ist, daß mit ein und demselben mechanischen Aufbau allein durch Auswechseln der Laserquelle und damit durch Ändern der Wellenlänge eine Änderung der Winkelauflösung erreichbar ist. Die Winkelauflösung läßt sich ferner durch elektronische Frequenzvervielfachung des Detektorsignals erhöhen.

Um die kosinusförmig verlaufende Winkelauflösung der erfindungsgemäßen Vorrichtung weitgehend zu linearisieren, können zwei oder mehr rotierende Retroreflektoren verwendet werden, die bezüglich des Drehwinkels in der maximalen Wegauslenkung gegeneinander versetzt sind.

Ebenso ist eine Linearisierung dadurch zu erreichen, daß zwei oder mehr Laserstrahlen mit zueinander geneigten, optischen Achsen und in zueinander versetzten Ebenen in den Retroreflektor RF nach Fig.1 eingestrahlt werden. Für jeden Strahl ist dazu eine Anordnung aus zwei festen Spiegeln, einem Strahlteiler und einem Detektor erforderlich. Dabei ist es zweckmäßig, daß die optischen Achsen aller verwendeten Laserstrahlen denselben Neigungswinkel in Bezug auf die Drehachse des Retroreflektors RF haben und diese in demselben Punkt SP schneiden.

4

Die Laserstrahlen sind also konzentrisch und symmetrisch um die Drehachse DA angeordnet. Alle Strahlteiler stehen unter einem Winkel von 45° zur optischen Achse OA des jeweils zugehörigen Laserstrahls; jeweils ein fester Spiegel ist parallel und der andere Spiegel senkrecht zu der zugehörigen optischen Achse angeordnet. Dadurch ist erreicht, daß die maximalen, optischen Wegunterschiede für jeden Laserstrahl dieselben sind und die Kosinus-Abhängigkeit der Wegunterschiede von Strahl zu Strahl phasenverschoben ist.

Die Phase ergibt sich hierbei aus dem Winkel, den Einstrahlungsebenen miteinander einschließen. Einstrahlungsebenen sind die Ebenen, welche die jeweiligen optischen Achsen mit der Drehachse DA des Retroreflektors RF aufspannen. Werden beispielsweise zwei Laserstrahlen verwendet und bilden ihre Einstrahlungsebenen einen Winkel von 90° miteinander, so beträgt die Phase der Kosinus-Abhängigkeiten gerade 90°, d.h. der lineare Bereich für den einen Strahl fällt in den nichtlinearen des anderen, wie es erwünscht ist.

Bei einer Ausführung mit zwei Strahlen ist eine zweite Anordnung mit zwei festen Spiegeln, einem Strahlteiler, einer Sammellinse und einem Detektor erforderlich; diese Anordnung ist identisch mit der Anordnung nach Fig.1 aus den Elementen S1, S2, ST, SL und D. Die zweite Anordnung ist bezüglich der ersten um 90° um die Drehachse herum geklappt und so justiert.

Für eine derartige Anordnung wird zweckmäßigerweise nur eine einzige Laserquelle verwendet, deren Strahlung durch entsprechende Strahlteiler in zwei oder mehr Strahlenbündel aufgeteilt wird, welche durch Umlenkspiegel in die gewünschte Richtung gelenkt werden.

Bei einer Anordnung zur Linearisierung einer Vorrichtung nach Fig.2 ist für jeden weiteren Strahl zusätzlich auch ein brechender Keil anzubringen. Der Keil ist hierbei so ausgerichtet, daß er jeweils senkrecht zur optischen Achse OA und zur Drehachse DA liegt, wobei seine Symmetrieachse, durch welche der Keil in spiegelsymmetrische Hälften geteilt wird, in der durch diese beiden Achsen aufgespannten Ebene liegt. Die einzelnen Laserstrahlen laufen dabei parallel und sind konzentrisch um die Drehachse angeordnet. Auch hier wird also jede weitere Anordnung aus festen Spiegeln, Strahlteiler, Sammellinse, Detektor und Keil in Bezug zu entsprechenden vorhandenen Anordnungen um einen bestimmten Winkel beispielsweise von 90° um die Drehachse geklappt.

Alle beschriebenen Linearisierungsanordnungen mit zwei oder mehr Laserstrahlen oder Retroreflektoranordnungen sind auch zur Steigerung der Winkelauflösung nutzbar. Hierzu werden jeweils die Anordnungen aus einem Strahlteiler und den beiden festen Spiegeln so justiert, daß sie untereinander unterschiedliche Wegunterschiede durch die beiden Interferometerarme aufweisen. Dies läßt sich dadurch verwirklichen, daß der Neigungswinkel $\alpha$ und/oder der Abstand d unterschiedlich gewählt werden. Damit ist erreicht, daß die Laserinterferenzen der einzelnen Anordnungen zueinander phasenverschoben auftreten, wodurch eine Steigerung der Winkelauflösung erreicht ist.

Wird eine Anzahl n von Laserstrahlen oder von Retroreflektoranordnungen verwendet, sind ferner die Spiegel und Strahlteiler so justiert, daß sich die optischen Wegunterschiede gerade jeweils um $\lambda/n$ von der einen zur nächsten Anordnung unterscheiden, dann ist die Winkelauflösung um den Faktor n größer als bei einer einfachen Anordnung. Die auftretenden Maxima und Minima der Laserinterferenzen der einzelnen Anordnungen sind dann um die optische Phase $\lambda/n$ gegeneinander versetzt; d.h. sie treten in unterschiedlichen Winkelstellungen auf.

Die feine Justierung der festen Spiegel kann beispielsweise mit piezokeramischen Justierelementen durchgeführt werden, indem diese Justierelemente als Spiegelhalterungen dienen. Der Weg durch jeweils einen Interferometerarm wird dabei so eingestellt, daß die zugehörigen Interferenzextrema die gewünschte Phase gegenüber den anderen aufweisen.

Die Anzahl der pro Zeiteinheit auftretenden Laserinterferenzen kann mit einem Zeittakt definierter Frequenz ermittelt und daraus kann die Drehgeschwindigkeit bzw. die Drehzahl des Meßobjekts bestimmt werden. Hierbei werden die vorstehenden Gl.'en (3) bis (5) in analoger Weise zur Berechnung verwendet. Die erfindungsgemäße Einrichtung läßt sich somit auch zur Drehzahlmessung bzw. zur Drehgeschwindigkeitsmessung verwenden.

Die erfindungsgemäße Einrichtung ist besonders geeignet für Anwendungen, bei welchen Projektionen von Drehzeigern betrachtet werden müssen, welche Kosinus-Abhängigkeiten aufweisen. Hierzu ist jeder verfügbare Laser geeignet, so beispielsweise auch Röntgenlaser, oder auch jede Strahlungsquelle, welche eine Strahlung aussendet, deren Kohärenzlänge wenigstens so groß ist wie der größte Wegunterschied bei der Rotation des Reflektors. Im übrigen sind auch Laserdioden u.ä. verwendbar.

EP 0 353 647 B1

**Patentansprüche**

1. Einrichtung zur Messung des Drehwinkels eines rotierenden Objektes, unter Verwendung eines optischen Interferometers (IF) mit einem drehbaren Retroreflektor (RF), dessen Drehachse (DA) zu seiner Symmetrieachse (SY) bezogen auf das Symmetriezentrum (Z), seitlich versetzt ist und dessen Drehachse (DA) und Symmetrieachse (SY) denselben Winkel ($\alpha$) miteinander einschließen wie die Retroreflektor-Drehachse (DA) und die optische Achse (OA) des Interferometers, mit einem Strahlteiler (ST), mit festen, senkrecht zueinander angeordneten Planspiegeln (S1, S2) und mit einem Detektor (D), wobei in dem Interferometer (IF) eine Wegauslenkung durch Rotation des Retroreflektors (RF) bewirkt wird, dadurch **gekennzeichnet,** daß das zu messende, rotierende Objekt an eine helle (W) des Retroreflektors (RF) angekoppelt ist, so daß die Rotationsbewegung des Retroreflektors (RF) synchron zu derjenigen des rotierenden Objektes ist, und daß die Strahlung einer Laserquelle (L) mit definierter Wellenlänge ($\lambda$) in das Interferometer (IF) so eingebracht ist, daß durch diese Laserstrahlung über den Strahlteiler (ST), die festen Spiegel (S1, S2) und den Retroreflektor (RF) am Detektor (D) Laserstrahlungsinterferenzen erzeugt und registriert werden, welche in Kosinus-Abhängigkeit zu durch die Rotation des Retroreflektors (RF) bewirkten Wegunterschieden und damit in Kosinus -Abhängigkeit zum Drehwinkel ($\gamma$) des Retroreflektors (RF) bzw. des rotierenden Objektes sind.

2. Einrichtung nach Anspruch 1, bei welcher zusätzlich Zwischen dem einen festen Spiegel (2) und dem Retroreflektor (RF) ein brechender Keil (K) angeordnet ist, dadurch **gekennzeichnet,** daß aus den vom Detektor (D) erfaßten Laserstrahl-Interferenzen, welche in Kosinus-Abhängigkeit zu durch die unterschiedliche Dicke des brechenden Keils (K) bewirkten Wegunterschieden und damit in Kosinus-Abhängigkeit vom Drehwinkel ($\gamma$) des Retroreflektors (RF) bzw. des rotierenden Objekts sind, der Drehwinkel des rotierenden Objekts abgeleitet wird.

3. Einrichtung nach einem der Ansprüche 1 oder 2, dadurch **gekennzeichnet,** daß zwei oder mehr identische, derartige Einrichtungen zur Messung derselben Drehbewegung verwendbar sind, daß diese Einrichtungen derart zueinander orientiert sind, daß ihre Einstrahlungsebenen, welche durch ihre jeweilige optische Achse und die gemeinsame Drehachse festgelegt sind, einen Winkel von 90° oder weniger einschließen, und damit ihre Ko sinus-Abhängigkeit um 90° oder weniger gegeneinander versetzt sind, und daß von jeder der zwei oder mehr identischen Einrichtungen zur Winkelmessung aufeinanderfolgend nur der lineare Bereich der Kosinus-Abhängigkeit herangezogen ist.

4. Einrichtung nach einem der Ansprüche 1 bis 3, dadurch **gekennzeichnet,** daß die Winkelauflösung der Einrichtung durch Ändern des Winkels zwischen der Symmetrieachse (SY) und der Drehachse (DA) des Retroreflektors (RF) änderbar ist.

5. Einrichtung nach einem der Ansprüche 1 bis 4, dadurch **gekennzeichnet,** daß die Winkelauflösung der Einrichtung durch Ändern eines Abstandes (d) zwischen dem Symmetriezentrum (Z) und der Drehachse (DA) des Retroreflektors (RF) änderbar ist.

6. Einrichtung nach einem der Ansprüche 1 bis 5, dadurch **gekennzeichnet,** daß der Retroreflektor (RF) ein massives Element ist.

7. Einrichtung nach Anspruch 6, dadurch **gekennzeichnet,** daß Materialien für das massive Element vorzugsweise Quarz oder Lithiumfluorit für Laser mit sichtbarer oder ultravioletter Wellenlänge sind.

8. Einrichtung nach einem der Ansprüche 1 oder 2, dadurch **gekennzeichnet,** daß bei zwei oder mehr Retroreflektoranordnungen durch unterschiedliche Neigungswinkel ($\alpha$) und/oder unterschiedliche Abstände (d) die Laserstrahlung unterschiedliche Wegdifferenzenen derart aufweist, daß ihre Interferenzsignale gegeneinander phasenverschoben sind und damit eine Steigerung der Winkelauflösung erreicht ist.

**Claims**

1. Device for measuring the rotation angle of a rotating object using an optical interferometer (IF) having a rotatable retroreflector (RF), the rotation axis (DA) of which is laterally offset with respect to the symmetry axis (SY) thereof with respect to the symmetry centre (Z) and the rotation axis (DA) and

6

symmetry axis (SY) of which include with respect to each other the same angle ($\alpha$) as the retroreflector rotation axis (DA) and the optical axis (OA) of the interferometer, comprising a beam splitter (ST) comprising fixed mutually perpendicularly arranged plane mirrors (S1, S2) and a detector (D), a path deflection being effected in the interferometer (IF) by rotation of the retroreflector (RF), characterized in that the rotating object to be measured is coupled to a shaft (W) of the retroreflector (RF) so that the rotation movement of the retroreflector (RF) is synchronous with that of the rotating object, and that the radiation of a laser source (L) with defined wavelength ($\lambda$) is introduced into the interferometer (IF) in such a manner that by said laser radiation via the beam splitter (ST), the fixed mirrors (S1, S2) and the retroreflector (RF) at the detector (D) laser radiation interferences are generated and registered which are in cosine dependence on the path differences effected by the rotation of the retroreflector (RF) and thus in cosine dependence on the rotation angle ($\gamma$) of the retroreflector (RF) or the rotating object.

2. Device according to claim 1 in which in addition a refracting wedge (K) is arranged between the one fixed mirror (2) and the retroreflector (RF), characterized in that the rotation angle of the rotating object is derived from the laser beam interferences which are detected by the detector (D) and which are in cosine dependence on path differences effected by the different thickness of the refracting wedge (K) and thus in cosine dependence on the rotation angle ($\gamma$) of the retroreflector (RF) or of the rotating object.

3. Device according to claim 1 or 2, characterized in that two or more identical such devices can be used for measuring the same rotation movement, that said devices are orientated with respect to each other in such a manner that their incoming radiation planes defined by their respective optical axes and the common rotation axis enclose an angle of 90° or less and thus the cosine dependence is offset by 90° or less with respect to each other and that for the angle measurement only the linear region of the cosine dependence of each of the two or more identical devices is consecutively employed.

4. Device according to any one of claims 1 to 3, characterized in that the angular resolution of the device is variable by varying the angle between the symmetry axis (SY) and the rotation axis (DA) of the retroreflector (RF).

5. Device according to any one of claims 1 to 4, characterized in that the angular resolution of the device is variable by varying the distance (d) between the symmetry centre (Z) and the rotation axis (DA) of the retroreflector (RF).

6. Device according to any one of claims 1 to 5, characterized in that the retroreflector (RF) is a solid element.

7. Device according to claim 6, characterized in that materials for the solid element are preferably quartz or lithium flourite for lasers with visible or ultraviolet wavelength.

8. Device according to claim 1 or 2, characterized in that with two or more retroreflector arrangements by different inclination angles ($\alpha$) and/or different distances (d) the laser radiation has different path differences in such a manner that their interference signals are phase-displaced with respect to each other and thus an increase of the angular resolution is achieved.

**Revendications**

1. Dispositif pour la mesure de l'angle de rotation d'un objet en rotation en utilisant un réfractomètre interférentiel optique (IF) avec un rétroréflecteur rotatif (RF) dont l'axe de rotation (DA) par rapport à son axe de symétrie (SY) rapporté au centre de symétrie (Z), est décalé latéralement et dont l'axe de rotation (DA) et l'axe de symétrie (SY) incluent le même angle ($\alpha$) que l'axe de rotation (DA) du rétroréflecteur et l'axe optique (OA) du réfractomètre interférentiel, avec un séparateur de rayons (ST), avec des miroirs plans (S1, S2) fixes, agencés perpendiculairement entre eux et avec un détecteur (D), un écart de course se produisant dans le réfractomètre interférentiel (IF) par rotation du rétroréflecteur (RF), caractérisé en ce que l'objet en rotation à mesurer est accouplé à une onde (W) du rétroréflecteur (RF) de sorte que le mouvement de rotation du rétroréflecteur (RF) est synchrone à celui de l'objet en rotation et en ce que le rayonnement d'une source laser (L) avec une longueur d'onde définie ($\lambda$) est amené dans le réfractomètre interférentiel (IF) de telle sorte que grâce à ce rayonnement laser par le séparateur de rayons (ST), les miroirs fixes (S1, S2) et le rétroréflecteur (RF) des interférences de rayonnement laser sont générées et enregistrées au niveau du détecteur (D), interférences de rayonnement laser qui sont en dépendance cosinus par rapport aux écarts de course provoqués par la rotation du rétroréflecteur (RF) et par conséquent en dépendance cosinus par rapport à l'angle de rotation ($\gamma$) du rétroréflecteur (RF) ou de l'objet en rotation.

2. Dispositif selon la revendication 1, dans lequel de plus, entre l'un des miroirs fixes (2) et le rétroréflecteur (RF) est agencée une mire réfringente (K), caractérisé en ce qu'à partir des interférences de rayon laser saisies par le détecteur (D), interférences qui sont en dépendance cosinus par rapport aux écarts de course provoqués par l'épaisseur différentielle de la mire réfringente (K) et par conséquent en dépendance cosinus de l'angle de rotation ($\gamma$) du rétroréflecteur (RF) ou de l'objet en rotation, on dérive l'angle de rotation de l'objet en rotation.

3. Dispositif selon l'une des revendications 1 ou 2, caractérisé en ce que l'on peut utiliser deux ou plus de deux dispositifs identiques pour la mesure du même mouvement de rotation, en ce que ces dispositifs sont orientés entre eux de telle manière que leurs plans de radiation incidente déterminés par leur axe optique respectif et l'axe commun de rotation incluent un angle de 90° ou moins et en ce que leur dépendance cosinus est décalée de 90° ou moins l'un par rapport à l'autre et en ce qu'à partir de chacun des deux ou plus de deux dispositifs identiques pour la mesure angulaire on ne fait appel en succession qu'à la zone linéaire de la dépendance cosinus.

4. Dispositif selon l'une des revendications 1 à 3, caractérisé en ce que la résolution angulaire du dispositif peut être modifiée par modification de l'angle entre l'axe de symétrie (SY) et l'axe de rotation (DA) du rétroréflecteur (RF).

5. Dispositif selon l'une des revendications 1 à 4, caractérisé en ce que la résolution angulaire du dispositif est variable par modification d'une distance (d) entre le centre de symétrie (Z) et l'axe de rotation (DA) du rétroréflecteur (RF).

6. Dispositif selon l'une des revendications 1 à 5, caractérisé en ce que le rétroréflecteur (RF) est un élément massif.

7. Dispositif selon la revendication 6, caractérisé en ce que les matériaux pour l'élément massif sont de préférence du quarts ou du fluorite de lithium pour le laser avec une longueur d'onde visible ou ultraviolette.

8. Dispositif selon l'une des revendications 1 ou 2, caractérisé en ce que pour deux ou plus de deux agencements de rétroréflecteur par angle d'inclinaison différentiel ($\alpha$) et/ou distance différentielle (d) le rayonnement laser présente des écarts de course différentiels de sorte que leurs signaux d'interférence sont en décalage de phase l'un par rapport à l'autre et que l'on obtient ainsi une augmentation de la définition angulaire.

Fig. 1

Fig. 2

Fig. 3